(19) **Europäisches Patentamt**
**European Patent Office**
**Office européen des brevets**

(11) Veröffentlichungsnummer: **0 298 281 B1**

(12) # EUROPÄISCHE PATENTSCHRIFT

(45) Veröffentlichungstag der Patentschrift:
24.07.91 Patentblatt 91/30

(51) Int. Cl.⁵: **F16K 15/02**

(21) Anmeldenummer: **88109458.5**

(22) Anmeldetag: **14.06.88**

(54) **Rückflussverhinderer.**

(30) Priorität: **09.07.87 DE 3722665**

(43) Veröffentlichungstag der Anmeldung:
**11.01.89 Patentblatt 89/02**

(45) Bekanntmachung des Hinweises auf die
Patenterteilung:
**24.07.91 Patentblatt 91/30**

(84) Benannte Vertragsstaaten:
**AT CH DE ES FR IT LI NL SE**

(56) Entgegenhaltungen:
**DE-A- 2 715 395**
**FR-A- 2 471 536**

(56) Entgegenhaltungen:
**US-A- 3 605 802**
**US-A- 3 995 658**
**US-A- 4 271 862**
**US-A- 4 368 756**

(73) Patentinhaber: **Dieter Wildfang GmbH**
**Klosterrunsstr. 11**
**W-7840 Müllheim (DE)**

(72) Erfinder: **Wildfang, Dieter**
**Alemannenstrasse 8**
**W-7840 Müllheim (DE)**

(74) Vertreter: **Schmitt, Hans, Dipl.-Ing. et al**
**Patentanwälte Dipl.-Ing H. Schmitt Dipl.-Ing.**
**W. Maucher Dreikönigstrasse 13**
**W-7800 Freiburg (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung geht aus von einem Rückflußverhinderer, wie er aus FR-A-2 471 536 bekannt ist.

Rückflußverhinderer werden in Versorgungsleitungen eingesetzt, wenn die Gefahr besteht, daß bei Druckabfall oder Druckausfall im Versorgungsnetz Flüssigkeit entgegen der Ausströmrichtung zurück ins Versorgungsnetz gelangen könnte. Zum Vermeiden oder wenigstens zum erheblichen Vermindern von radialen Schwingungen beim Ventilkörper und den damit verbundenen unerwünschten Geräuschentwicklungen rüstet man das Außengehäuse solcher Rückflußverhinderer mit Ventilführungsstegen aus, welche in Richtung des Ventilkörper-Verschiebeweges verlaufen und radial nach innen vorstehen. Solche Rückflußverhinderer sind z.B. bereits durch die US-A-28 00 142 bekannt, haben aber noch erhebliche Nachteile. Z.B. ragen bei Rückflußverhinderem nach US-A-28 00 142 im Querschnitt verhältnismäßig kräftig bemessene Ventilführungsstege mit ihren freien Enden zinnenartig in Richtung des Ventilsitzes. Solche kräftigen Querschnittsabmessungen der Ventilführungsstege sind wegen der beengten Platzverhältnisse im Gehäuseinneren von Rückflußverhinderem ungünstig. Werden die Ventilführungsstege mit kleinem Querschnit und/oder aus Kunststoff hergestellt, was bei Rückflußverhinderern aus Platzgründen und wegen einer preiswerten Herstellbarkeit erwünscht ist, haben die fingerartig von einem gemeinsamen Grundkörper ausgehenden Ventilführungsstege weder bei der Bereitstellung vor dem Zusammensetzen des Rückflußverhinderers noch bei dessen Montage und auch nicht bei dessen Betrieb die erwünschte Formsteifigkeit. Bereits beim Fertigen des Ventilführungsteils aus Kunststoff oder beim Auswerfen aus der Spritzmaschine oder beim Erkalten, aber auch beim Lagern und später beim Verarbeiten in einem Montageautomaten besteht laufend die Gefahr, daß sich die Führungsstege in unerwünschter Weise verformen. Dies kann einerseits zum Verklemmen des Ventilkörpers führen oder bei großzügig bemessener Toleranz auch zu radialen Bewegungen des Ventilkörpers mit entsprechender Geräuschbildung. Letzteres gilt besonders, wenn die Ventilführungsstege beziehungsweise das zugehörige Ventilführungsteil aus Metall besteht. Durch die eingangs erwähnte FR-A-2 471 535 kennt man auch bereits einen Rückflußverhinderer der eingangs erwähnten Art, bei dem die über einen gemeinsamen Grundkörper mit dem Außengehäuse verbundenen Ventilführungsstege an ihren dem Grundkörper abgewandten Enden über einen Ring verbunden sind. Dieser Ring liegt aber lediglich außen- und stirnseitig an der Innenhöhlung des Außengehäuses des Rückflußverhinderers an, so daß er und die damit verbundenen Ventilführungsstege nur eine unzureichende Lagefixierung erhalten.

Es besteht daher die Aufgabe einen Rückflußverhinderer der eingangs erwähnten Art zu schaffen, bei dem einerseits die Ventilführungsstege einen kleinen Querschnitt haben und das gesamte Ventilführungsteil platzsparend ist, bei dem andererseits eine gute Betriebssicherheit sowie eine einfache Herstellbarkeit gegeben ist.

Zur Lösung dieser Aufgabe werden bei einem Rückflußverhinderer der eingangs erwähnten Art die Maßnahmen des Kennzeichnungsteils von Anspruch 1 vorgeschlagen. Dadurch ergibt sich eine genaue und sichere Festlegung des Ringes und der damit verbundenen Ventilführungsstege in der gewünschten Arbeitsposition innerhalb des Rückflußverhinderers. Die Ventilführungsstege können mit sehr geringen Toleranzen hergestellt werden, ohne daß es beim Ventil zu Verklemmungen oder zum Flattern unter Geräuschbildung kommen kann. Dabei können die Ventilführungsstege und das zugehörige Ventilführungsteil so raumsparend ausgebildet werden, daß die Ausmaße des Rückflußverhinderers gegenüber vorbekannten Rückflußverhinderem nicht verändert zu werden brauchen. Die in ihrem lichten Querschnitt auf den Ring abgestimmte Zentriernut begünstigt auch, daß der die Ventilführungsstege verbindende Ring bei der Montage in die vorgesehene Betriebslage gelangt.

Weiterbildungen der Erfindung sind in den Unteransprüchen aufgeführt. Dabei stellen die Merkmale von Anspruch 2 nicht nur eine Montagehilfe für das Ventilführungsteil dar, sondern tragen auch dazu bei, daß die Ventilführungsstege in ihre vorgesehene Betriebslage gelangen und dort ohne besondere zusätzliche Maßnahmen gut gehalten werden. Die Merkmale von Anspruch 3 begünstigen die Schaffung einer Führung des Ventilkörpers mit Hilfe eines Ventilschaftes und einer Ventilführungshülse dafür mit sehr einfachen Mitteln. Die Merkmale von Anspruch 4 ergeben eine strömungsgünstige Anordnung und einfache Herstellbarkeit. Durch die Merkmale nach Anspruch 6 erhält man auch bei vergleichsweise geringen Querschnittsabmessungen eine gute Biegesteifigkeit der Ventilführungsstege.

Nachstehend wird die Erfindung anhand der Zeichnung in Verbindung mit einem bevorzugten Ausführungsbeispiel näher beschrieben.

Es zeigt:

Fig. 1    eine Seitenansicht eines halbseitig im Schnitt gehaltenen Rückflußverhinderers in Schließstellung seines Ventils,

Fig. 2    eine etwa Fig. 1 entsprechende Darstellung, hier jedoch in Offenstellung seines Ventils,

Fig. 3    eine Seitenansicht eines Ventilführungsteiles und

Fig. 4    eine Draufsicht auf das in Fig. 3 gezeigte Ventilführungsteil.

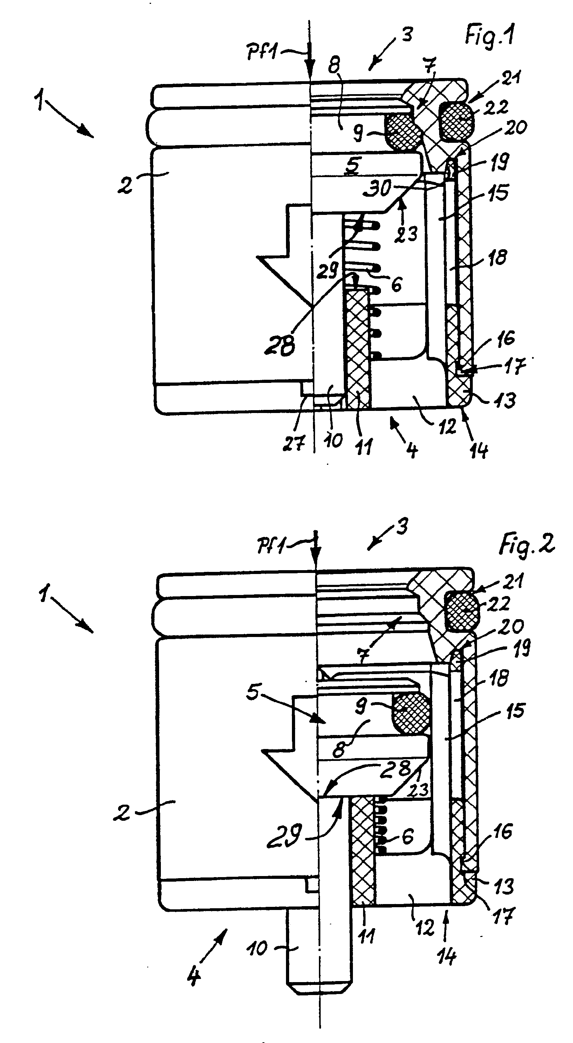

Ein Rückflußverhinderer 1 (Fig. 1 u. 2) hat ein Außengehäuse 2 mit einer Zuflußseite 3 sowie einer Abflußseite 4. Dieser Rückflußverhinderer 1 dient zum Einsatz in Versorgungsleitungen, in denen nur ein durch den Pfeil Pf 1 gekennzeichneter Durchfluß und kein Rückfluß möglich sein soll.

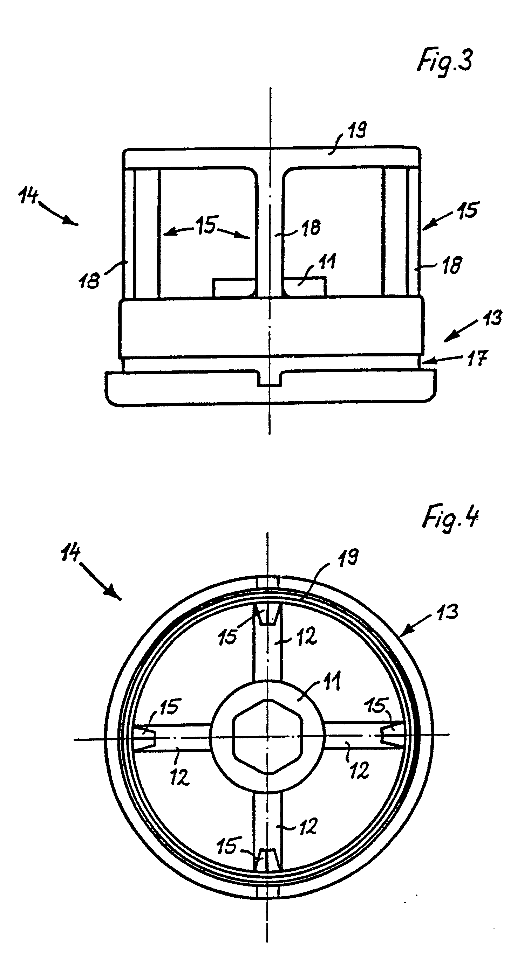

Innerhalb des Außengehäuses 2 befindet sich ein Ventilkörper 5, der mittels einer Druckfeder 6 entgegen der Durchströmrichtung (Pfeil Pf 1) in Schließstellung (Fig. 1) gegen einen Ventilsitz 7 des Außengehäuses 2 angedrückt wird. Der Ventilkörper 5 hat eine Ringnut 8 zur Aufnahme eines O-Ringes 9 und, zentral einseitig vorstehend, einen Ventilschaft 10, der in einer Führungshülse 11 geführt ist. Diese Führungshülse 11 dient auch zur Zentrierung der Druckfeder 6. Die Führungshülse 11 ist über Radialstege 12 (vgl. Fig. 1, 3 u. 4) mit einem gemeinsamen ringförmigen Grundkörper 13 eines im ganzen mit 14 bezeichneten Ventilführungsteiles verbunden, welches als Einzelteil in Fig. 3 und 4 dargestellt ist. Die radial nach innen vorstehenden Ventilführungsstege 15 verlaufen längs des Verschiebeweges zwischen Offenstellung (Fig. 2) und Schließstellung (Fig. 1) des Ventilkörpers 5, so daß er sich mit seiner Außenseite geführt daran anlegen kann. Daraus ergibt sich — z.B. neben der Führung durch den Ventilschaft 10 — eine zusätzliche, unmittelbar am Ventilkörper 5 angreifende Führung. In Offenstellung (Fig. 2) wird der Ventilkörper 5 außen umströmt, wobei der Durchtrittsquerschnitt durch den zwischen ihm und dem Außengehäuse 2 vorhandenen Ringraum gebildet ist. Dabei sind die dem Grundkörper 13 abgewandten Enden der Ventilführungsstege 15 über einen Ring 19 verbunden.

Erfindungsgemäß ist nun vorgesehen, daß im Außengehäuse eine auf die Umrißform des Ringes 19 abgestimmte. Zentrier-Ringnut 20 zum Aufnehmen und Festlegen dieses Ringes 19 vorgesehen ist. Dieser greift in Montagestellung in die etwa axial gerichtete Zentrier-Ringnut 20 innerhalb des Außengehäuses 2 ein, und bewirkt eine Lagefixierung der an ihm befestigten Ventilführungsstege 15 innerhalb des Rückflußverhinderers 1.

Die radial innere Seite 30 der Ringnut 20 verläuft von ihrem ventilfernen Eingang zu ihrer Stirnseite hin schräg von innen unten nach außen oben. Sie bildet somit eine Auflaufschräge und Einführhilfe für die Enden der Ventilführungsstege 15 bzw. den dessen den Grundkörper 13 abgewandten Enden verbindenden Stabilisierungsring 19. Beim Zusammenbau von Außengehäuse 2 und Ventilführungsteil 14 werden dadurch die Führungsstege 15 radial nach außen bis zur Anlage an die Innenwand des Außengehäuses 2 geführt, woraus sich praktisch eine außenseitige Abstützung und Stabilisierung der Ventilführungsstege 15 über ihre gesamte Länge ergibt. Außerdem können dadurch auch kleinere Fertigungstoleranzen beim Ventilführungsteil 14 ausgeglichen werden. Die Zentrier-Ringnut 20 befindet sich am Außengehäuse 2 innenseitig im Anschluß an den Ventilsitz 7. Der Ring 19 und seine Festlegung innerhalb der Zentrier-Ringnut 20 bringen auch noch den Vorteil, daß ein Verformen der Führungsstege 15 bei höheren Temperaturen der durchfließenden Flüssigkeit verhindert wird. Eine entsprechende Form-Stabilisierung der Ventilführungsstege 15. Trägt wiederum dazu bei, daß deren Fertigungstoleranzen und ihr Spiel gegenüber dem zu führenden Ventilkörper 5 kleingehalten werden können. Dadurch können zum einen insbesondere etwa radiale Schwingungen des Ventilkörpers 5 und damit unerwünschte Geräuschbildungen verhindert oder wenigstens weitestgehend vermindert werden ; andererseits ist weitestgehend sichergestellt, daß ein Verklemmen des Ventilkörpers 5 innerhalb des Ventilführungsteils 14 nicht stattfinden kann.

Die Führung des Ventilkörpers 5 mit Hilfe der Ventilführungsstege 15 erlaubt auch, den Ventilkörper 5 in vorteilhafter Weise als Rotationskörper auszubilden, was fertigungstechnisch günstig ist und eine hohe Maßgenauigkeit möglich macht. Dadurch wird einerseits die bereits erwähnte gute Führung des Ventilkörpers 5 über seinen Öffnungs- bzw. Schließweg und gleichzeitig eine sichere Abdichtung mittels des Ventilkörpers in Schließstellung erreicht.

Im Ausführungsbeispiel (vgl. insbesondere Fig. 1, 2 u. 4) hat der Ventilkörper 5 einen Ventilschaft 10 und am Rückflußverhinderer 1 ist die Führungshülse 11 dafür vorgesehen. Nach einer vorteilhaften Weiterbildung der Erfindung ist diese Ventilführungshülse 11 für den Ventilschaft 10 vom Ventilführungsteil 14 gebildet, vorzugsweise in einstückiger Ausführungsweise, wobei die Führungshülse 11 über Radialstege 12 gehalten ist. Der Ventilkörper 5 erhält eine verbesserte Führung, ohne daß dadurch der Herstellungsaufwand in einem ins Gewicht fallenden Umfang erhöht wird. Eine vorteilhafte Weiterbildung der vorbeschriebenen Ausführungsform des Rückflußverhinderers 1 besteht darin, daß die die Führungshülse 11 haltenden Radialstege 12 — in Längsrichtung des Ventilführungsteils gesehen — mit den Ventilführungsstegen 15 fluchten.

Die axiale Länge der Ventilführungsstege 15 ist so bemessen, daß die Führung des Ventilkörpers 5 bei oder kurz vor dessen Schließstellung endet. Es ergibt sich dadurch bei oder etwas vor der Schließstellung des Ventilkörpers ein Abstand zwischen diesem und den Ventilführungsstegen 15, so daß sich der Ventilkörper 5 beim Einlauf in den Ventilsitz 7, ungehindert durch eine zusätzliche Führung, praktisch selbst zentrieren kann. Dadurch erhält man eine sichere Abdichtung. Dabei ist zweckmäßigerweise auf der dem Ventilsitz 7 abgewandten Seite des Ventilkörpers 5 eine Auflaufschräge 23 vorgesehen, durch die der Ventilkörper 5 beim Verschieben in Richtung seiner Offenstellung in die Führung durch die Ventilführungsstege 15 eingeleitet wird.

Insbesondere aus Fig. 1-3 erkennt man gut, daß die Ventilführungsstege 15 im Querschnitt etwa T-förmig mit außenliegendem T-Quersteg 18 ausgebildet sind. Fig. 4 läßt noch gut erkennen, daß die Ventilführungsstege radial nach innen in ihrem Querschnitt abnehmen. Dadurch werden, praktisch ohne Beeinträchtigung der Führung und der Biegesteifigkeit der Ventilführungsstege 15 die Strömungsverhältnisse im Bereich der Ventilführungsstege 15 verbessert.

Die Offenstellung des Ventilkörpers 5 ist durch dessen Anlage an der Führungshülse 11 begrenzt. In der Nähe des Ventilsitzes 7 ist außenseitig am Außengehäuse 2 eine Ringnut 21 zur Aufnahme eines O-Ringes 22 vorgesehen, mittels dem eine Abdichtung zwischen einer Rohrleitung und dem darin eingesetzten Rückflußverhinderer 1 erzielt wird (vgl. Fig. 1 u. 2.)

Man erhält eine gute linien- bzw.flächenhafte Führung des Ventilkörpers 5, wenn wenigstens drei, vorzugsweise vier um den Umfang des Ventilkörpers 5 verteilte Ventilführungsstege 15 vorgesehen sind. Dabei sind vier gleichmäßig um den Umfang des Ventilkörpers 5 verteilte Ventilführungsstege besonders vorteilhaft und es ist zweckmäßig, wenn das Ventilführungsteil 14 zusammen mit den vier Ventilführungsstegen 15 und dem Stabilisierungsring 19 einstückig aus Kunststoff besteht. Die vorerwähnte flächenhafte Führung des Ventilkörpers, durch die auch bei Kalkansatz Verhakungen und damit Funktionsbeeinträchtigungen des Rückflußverhinderers vermieden werden, haben auch nur einen sehr geringen Verschleiß, so daß sich eine wesentliche erhöhte lebensdauer des Rückflußverhinderers 1 ergibt.

Aus Fig. 1 und 2 erkennt man noch gut, daß das Ventilführungsteil und der Grundkörper 13 Rastmittel zum verrastenden Verbinden beider Teile aufweisen und daß die Stirnfläche 28 der Führungshülse 11 als Anschlagfläche für die Unterseite 29 des Ventilkörpers 5 vorgesehen ist (Fig. 2). Wenn man von den zwischen den Ventilführungsstegen 15 befindlichen und den stirnseitigen Öffnungen absieht, stellt das Ventilführungsteil 14 ein im wesentlichen in sich geschlossenes Einbauteil dar, das keine einzelnen, vorstehenden Finger od. dgl. Teile hat, welche bei Herstellung und Montage stören könnten. Es ist von der dem Ventilsitz 7 abgewandten Seite des Außengehäuses 2 her in dieses einsetz- und verrastbar, wodurch dann gleichzeitig die Stirnfläche 28 der Führungshülse die Anschlagfläche für die Unterseite 29 des Ventilkörpers festlegt. Als Rastmittel ist dabei an einem Ende des Außengehäuses 2 ein nach innen vorstehender, im Ausführungsbeispiel umlaufender Rand 16 und an dem Grundkörper 13 des Ventilführungsteils 14 eine Ringnut vorgesehen.

## Patentansprüche

1. Rückflußverhinderer (1) zum Einsetzen in Strömungsführungen, mit einem Außengehäuse (2) sowie einem darin befindlichen Ventil, welches einen entgegen der Durchströmrichtung gegen einen Ventilsitz (7) verschiebbaren Ventilkörper (5) sowie ein separates Ventilführungsteil (14) hat, welches in Richtung des Ventilkörper-Verschiebeweges verlaufende, radial nach innen vorstehende Ventilführungsstege (15) aufweist, die über einen gemeinsamen Grundkörper (13) mit dem Außengehäuse (2) verbunden sind und die an ihren dem Grundkörper (13) abgewandten Enden über einen Ring (19) verbunden sind, **dadurch gekennzeichnet, daß** in dem Außengehäuse (2) eine in ihrem lichten Querschnitt auf den Ring (19) abgestimmte Zentrier-Ringnut (20) zum Aufnehmen und Festlegen dieses Ringes vorgesehen ist.

2. Rückflußverhinderer nach Anspruch 1, dadurch gekennzeichnet, daß die radial innere Seite (30) der Zentrier-Ringnut (20) von ihrem ventilfernen Eingang zu ihrer Stirnseite hin schräg von innen unten nach außen oben verläuft.

3. Rückflußverhinderer nach Anspruch 1 oder 2, dadurch gekennzeichnet, daß das Ventilführungsteil (14) eine Führungshülse (11) für einen Ventilschaft (10) des ventilkörpers aufweist, wobei die Führungshülse (11) vorzugsweise einstückig über Radialstege (12) mit dem Ventilführungsteil (14) in Verbindung steht.

4. Rückflußverhinderer nach Anspruch 3, wobei die Radialstege (12) — in Längsrichtung des Ventilführungsteils (14) gesehen — mit den Ventilführungsstegen (15) fluchten, dadurch gekennzeichnet, daß das Ventilführungsteil einstückig aus Kunststoff besteht.

5. Rückflußverhinderer nach wenigstens einem der Ansprüche 1 bis 4, dadurch gekennzeichnet, daß die Ventilführungsstege (15) bei Schließstellung des Ventilkörpers (5) einen Abstand zu diesem aufweisen, und daß der Ventilkörper (5) an seiner dem Ventilsitz (7) abgewandten Seite vorzugsweise eine Auflaufschräge (23) für die Enden der Ventilführungsstege (15) hat.

6. Rückflußverhinderer nach wenigstens einem der Ansprüche 1 bis 5, dadurch gekennzeichnet, daß die Ventilführungsstege (15) im Querschnitt etwa T-förmig mit außenliegendem T-Quersteg (18) ausgebildet sind, wobei vorzugsweise der Querschnitt der Ventilführungsstege (15) radial nach innen abnimmt.

7. Rückflußverhinderer nach wenigstens einem der Ansprüche 1 bis 6, dadurch gekennzeichnet, daß das Ventilführungsteil (14) wenigstens drei, vorzugsweise vier um den Umfang des Ventilkörpers (5) verteilte Ventilführungsstege (15) aufweist.

8. Rückflußverhinderer nach wenigstens einem der Ansprüche 1 bis 7, dadurch gekennzeichnet, daß das Ventilführungsteil (14) und das Außengehäuse (2) Rastmittel zum verrastenden Verbinden beider Teile aufweist.

9. Rückflußverhinderer nach Anspruch 8, dadurch gekennzeichnet, daß als Rastmittel an einem Ende des Außengehäuses (2) ein nach innen vorstehender, vorzugsweise umlaufender Rand (16) und an dem Ventilführungsteil (14) eine Ringnut (17) vorgesehen sind.

10. Rückflußverhinderer nach einem oder mehreren der Ansprüche 3 bis 9, dadurch gekennzeichnet, daß die Stirnfläche (28) der Führungshülse (11) als Anschlagfläche für die Unterseite (29) des Ventilkörpers (5) vorgesehen ist.

## Claims

1. A return flow preventer (1) for inserting in flow guides, including an outer housing (2) as well as a valve situated therein, said valve having a valve body (5) slidable against a valve seat (7) counter to the direction of flow as well as a separate valve guide member (14) having valve guide webs (15) running in the direction of the sliding path of the valve body and protruding radially inwardly, said valve guide webs being connected to the outer housing (2) by way of a common base (13) and being connected at their ends averted from the base (13) by way of a ring (19), **characterized in that** in the outer housing (2) a centering ring groove (20) is provided, the clear cross section of which is adapted to the ring (19), said centering ring groove serving to receive and locate said ring.

2. A backflow preventer as claimed in claim 1, characterized in that the radially inner side (30) of the centering ring groove (20) shows an oblique development from the entrance thereof remote from the valve to the end face thereof, said development running from the inside bottom to the outside top.

3. A backflow preventer as claimed in claim 1 or claim 2, characterized in that the valve guide member (14) has a guide bush (11) for a valve stem (10) of the valve body, the guide bush (11) preferably being connected in one piece with the valve guide member (14) via radial webs (12).

4. A backflow preventer as claimed in claim 3, the radial webs (12) — viewed in the longitudinal direction of the valve guide member (14) — being in alignment with the valve guide webs (15), characterized in that the valve guide member is composed in one piece of plastic.

5. A backflow preventer as claimed in at least one of claims 1 to 4, characterized in that in the closed position of the valve body (5) the valve guide webs (15) are spaced therefrom, and that on that side of the valve body (5) which is averted from the valve seat (7) said valve body preferably has an incline (23) for the ends of the valve guide webs (15).

6. A backflow preventer as claimed in at least one of claims 1 to 5, characterized in that the valve guide webs (15) are devised to be approximately T-shaped in cross section with the crosspiece (18) of the T being outlying, preferably the cross section of the valve guide webs (15) decreasing radially inwardly.

7. A backflow preventer as claimed in at least one of claims 1 to 6, characterized in that the valve guide member (14) has at least three, preferably four valve guide webs (15) distributed about the circumference of the valve body (5).

8. A backflow preventer as claimed in at least one of claims 1 to 7, characterized in that the valve guide member (14) and the outer housing (2) have arresting means for interlocking both parts.

9. A backflow preventer as claimed in claim 8, characterized in that in the form of arresting means one end of the outer housing (2) is provided with an inwardly protruding, preferably circumferential edge (16) and the valve guide member (14) is provided with a ring groove (17).

10. A backflow preventer as claimed in one or more of claims 3 to 9, characterized in that the face (28) of the guide bush (11) is provided as a stop face for the underside (29) of the valve body (5).

## Revendications

1. Système anti-reflux (1) à insérer dans des conduites de fluides, avec un boîtier extérieur dans lequel se trouve un clapet qui possède un corps de clapet (5) qui peut être déplacé en translation contre un siège de clapet (7) à l'encontre de la direction d'écoulement, ainsi qu'une partie séparée (14) de guidage de clapet qui présente des nervures de guidage de clapet (15) qui s'étendent en direction du parcours de translation du corps de clapet, qui dépassent radialement vers l'intérieur, qui sont reliées au boîtier extérieur (2) par l'intermédiaire d'un corps de base commun (13) et qui, à leurs extrémités opposées au corps de base (13), sont mutuellement reliées par l'intermédiaire d'une bague (19), **caractérisé** en ce qu'il est prévu, dans le boîtier extérieur (2), une rainure annulaire de centrage (20), dont la section intérieure est adaptée à la bague (19) et qui est destinée à recevoir et fixer en position cette bague.

2. Système anti-reflux selon la revendication 1, caractérisé en ce que le côté radialement intérieur (30) de la rainure annulaire de centrage (20) s'étend, depuis son entrée éloignée du clapet jusqu'à son côté frontal, en oblique d'en bas et à l'intérieur vers le haut et l'extérieur.

3. Système anti-reflux selon la revendication 1 ou 2, caractérisé en ce que la partie de guidage de clapet (14) présente une douille de guidage (11) pour une tige de clapet (10) du corps de clapet, la douille de guidage (11) étant de préférence réunie en une pièce à la partie de guidage de clapet (14), par l'intermédiaire de nervures radiales (12).

4. Système anti-reflux selon la revendication 3, les nervures radiales (12) étant, vu dans le sens longitudinal de la partie de guidage de clapet (14), en alignement avec les nervures de guidage de clapet (15), caractérisé en ce que la partie de guidage de clapet est réalisée en une pièce en matière plastique.

5. Système anti-reflux selon au moins une des revendications 1 à 4, caractérisé en ce que les nervures de guidage de clapet (15) sont distantes du corps de clapet (5) en position de fermeture de ce dernier, et en ce que le corps de clapet (5) possède de préférence, sur son côté éloigné du siège de clapet (7), une surface oblique de glissement (23) pour les extrémités des nervures de guidage de clapet (15).

6. Système anti-reflux selon au moins une des revendications 1 à 5, caractérisé en ce que les nervures de guidage de clapet (15) sont réalisées avec une section approximativement en forme de T avec la branche transversale (18) du T située à l'extérieur, la section des nervures de guidage de clapet (15) diminuant de préférence radialement vers l'intérieur.

7. Système anti-reflux selon au moins une des revendications 1 à 6, caractérisé en ce que la partie de guidage de clapet (14) présente au moins trois et de préférence quatre nervures de guidage de clapet (15), réparties sur la périphérie du corps de clapet (5).

8. Système anti-reflux selon au moins une des revendications 1 à 7, caractérisé en ce que la partie de guidage de clapet (14) et le boîtier extérieur (2) présentent des moyens d'enclenchement pour leur assemblage mutuel par enclenchement.

9. Système anti-reflux selon la revendication 8, caractérisé en ce qu'il est prévu comme moyens d'enclenchement un bord (16), dépassant vers l'intérieur et de préférence circulaire, à une extrémité du boîtier extérieur (2), et une rainure annulaire (17) sur la partie de guidage de clapet (14).

10. Système anti-reflux selon une ou plusieurs des revendications 3 à 9, caractérisé en ce que la face frontale (28) de la douille de guidage (11) est prévue comme face de butée pour le côté inférieur (29) du corps de clapet (5).

Fig.1

Fig.2

7

*Fig.3*

*Fig.4*